# EUROPEAN PATENT APPLICATION

(11) **EP 4 745 376 A1**
(43) Date of publication of application: **20.05.2026**
(21) Application number: 24842819.5
(22) Date of filing: 21.05.2024
(51) Int. Cl.: F02B 37/18

(54) **SUPERCHARGING SYSTEM AND CONTROL METHOD FOR SUPERCHARGING SYSTEM**

(30) Priority: 14.07.2023 JP 2023116091
(71) Applicant: Nissan Motor Co., Ltd., Yokohama-shi, Kanagawa 220-8623 (JP); MITSUBISHI HEAVY INDUSTRIES ENGINE & TURBOCHARGER, LTD., Sagamihara-shi, Kanagawa 252-5293 (JP)
(72) Inventor: ENDO, Tsubasa, Atsugi-shi, Kanagawa 243-0123 (JP); MORIKAWA, Masashi, Atsugi-shi, Kanagawa 243-0123 (JP); NAGAE, Satomi, Sagamihara-shi, Kanagawa 252-5293 (JP); NAKAGAWA, Hiroshi, Sagamihara-shi, Kanagawa 252-5293 (JP)
(74) Representative: Hoefer & Partner Patentanwälte mbB
(86) International application number: PCT/JP2024/018719
(87) International publication number: WO 2025/018023

(57) **Abstract**

In this supercharging system, an exhaust passage forms a curve by means of an upstream part into which exhaust flows from a supercharger or a bypass passage, a curved part that changes the direction of the exhaust that has flowed into the upstream part, and a downstream part that connects the curved part and an exhaust purification catalyst. A waste gate valve has a bulging part that bulges into the bypass passage when the bypass passage is closed. The waste gate valve is configured to swing open so as to move away from the inner course of the curve, toward the downstream side, at the outlet of the bypass passage. Furthermore, the waste gate valve is configured to open within a range less than an angle at which the waste gate valve would become parallel to the central axis of the upstream part.

## Description

### TECHNICAL FIELD

The present invention relates to a supercharging system and a method for controlling a supercharging system.

### BACKGROUND ART

JP2011-179401A discloses a wastegate valve provided with a protrusion for reducing a passage area of exhaust gas to smoothly control the responsiveness of an exhaust turbine.

### SUMMARY OF INVENTION

### PROBLEM TO BE SOLVED BY THE INVENTION

Exhaust of an internal combustion engine mounted on an automobile or the like is discharged after harmful components are reduced or removed by an exhaust gas purifying catalyst such as a three-way catalyst. However, in a state where the exhaust gas purifying catalyst is cooled immediately after the start of an engine or the like, the exhaust gas purifying catalyst usually does not have a sufficient reduction force (removal ability of harmful gas). Therefore, the exhaust gas purifying catalyst needs to be heated to a temperature range at which a sufficient reduction force is exhibited as early as possible.

Therefore, in particular, a supercharging system including an internal combustion engine and a supercharger adopts a layout in which the supercharger and an exhaust gas purifying catalyst are brought close to each other as much as possible. Accordingly, the exhaust gas is sent to the exhaust gas purifying catalyst while the high temperature is maintained, and the exhaust gas purifying catalyst is heated at an early stage.

However, there is a limit to a layout in which the supercharger and the exhaust gas purifying catalyst are brought close to each other. For example, if the supercharger and the exhaust gas purifying catalyst are forcibly brought close to each other, a degree of freedom of a shape of a housing (particularly, a turbine housing) is reduced, and other problems such as thermal fatigue of the housing occur. Therefore, in reality, a layout that cannot be adopted may be obtained.

An object of the present invention is to provide a supercharging system and a control method thereof capable of further advancing a temperature rise of an exhaust gas purifying catalyst in a supercharging system including an internal combustion engine and a supercharger.

### MEANS FOR SOLVING THE PROBLEM

An aspect of the present invention is a supercharging system including: an internal combustion engine; a supercharger that compresses intake air of the internal combustion engine by exhaust gas of the internal combustion engine; an exhaust gas purifying catalyst that purifies the exhaust gas; an exhaust passage that guides the exhaust gas from the supercharger to the exhaust gas purifying catalyst; a bypass passage that guides the exhaust gas to the exhaust passage without passing through the supercharger; and a wastegate valve that opens and closes the bypass passage. In this supercharging system, the exhaust passage forms a curve by an upstream portion into which the exhaust gas flows from the supercharger or the bypass passage, a curved portion that changes a direction of the exhaust gas flowed into the upstream portion, and a downstream portion that connects the curved portion and the exhaust gas purifying catalyst. The wastegate valve includes a bulge portion that bulges into the bypass passage when the bypass passage is closed, and is configured to swing open at an outlet of the bypass passage toward a downstream side and away from an inner course of the curve. The wastegate valve is configured to open within a range less than an angle at which the wastegate valve is parallel to a central axis of the upstream portion.

### EFFECT OF THE INVENTION

According to the present invention, it is possible to provide a supercharging system and a control method thereof capable of further advancing a temperature rise of an exhaust gas purifying catalyst.

### BRIEF DESCRIPTION OF DRAWINGS

[FIG. 1] FIG. 1 is a block diagram illustrating a schematic configuration of a supercharging system.
[FIG. 2] FIG. 2 is a diagram illustrating a layout of an exhaust system.
[FIG. 3] FIG. 3 is a diagram illustrating a maximum opening degree of a wastegate valve.
[FIG. 4] FIG. 4 is a diagram illustrating a three-dimensional positional relation between a bypass passage and a downstream portion.
[FIG. 5] FIG. 5 is a diagram schematically illustrating a flow of exhaust gas in a first comparative example.
[FIG. 6] FIG. 6 is a diagram schematically illustrating a flow of exhaust gas in a second comparative example.
[FIG. 7] FIG. 7 is a diagram schematically illustrating a flow of exhaust gas in the present embodiment.

### DESCRIPTION OF EMBODIMENTS

### [Embodiments]

Hereinafter, embodiments of the present invention will be described with reference to the drawings.

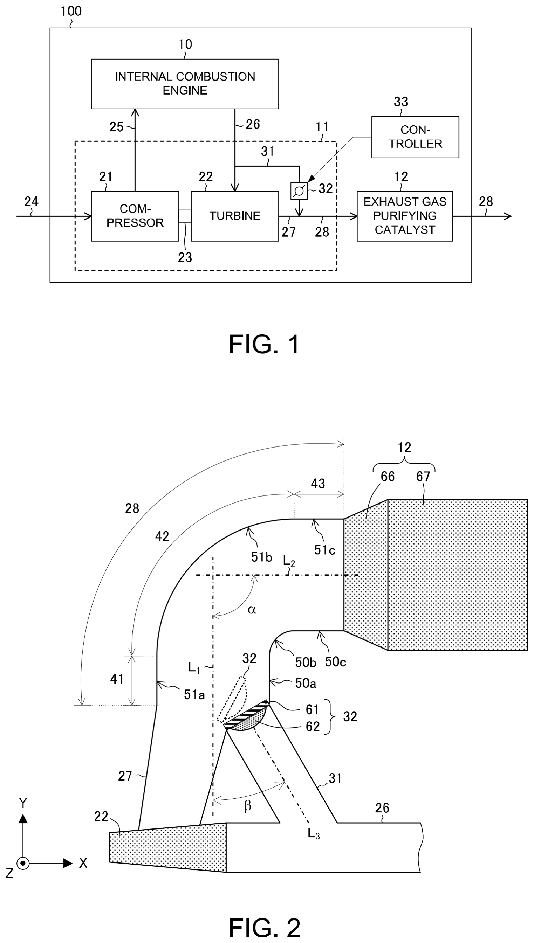

FIG. 1 is a block diagram illustrating a schematic configuration of a supercharging system 100. As illustrated in FIG. 1, the supercharging system 100 includes an internal combustion engine 10, a supercharger 11, and an exhaust gas purifying catalyst 12. In the present embodiment, the supercharging system 100 is mounted on a vehicle.

The internal combustion engine 10 is a driving force source of the vehicle, and converts combustion gas of other fuel such as gasoline into mechanical work. The internal combustion engine 10 transmits power to a drive shaft of the vehicle via a crank shaft (not illustrated) or the like.

The supercharger 11 compresses air (hereinafter, simply referred to as intake air) sucked by the internal combustion engine 10 by a flow of exhaust gas (hereinafter, simply referred to as exhaust) from the internal combustion engine 10. The supercharger 11 is implemented by an exhaust turbine type supercharger (so-called turbocharger) or a mechanical supercharger. In the present embodiment, the supercharger 11 is a turbocharger and is formed integrally with the internal combustion engine 10.

Specifically, the supercharger 11 includes a compressor 21, a turbine 22, and a bearing portion 23.

The compressor 21 is provided in an intake system of the internal combustion engine 10, compresses intake air, and supplies the compressed intake air to the internal combustion engine 10. An impeller wheel (hereinafter, referred to as a compressor wheel) of the compressor 21 is connected to an impeller wheel (hereinafter referred to as a turbine wheel) of the turbine 22 via the bearing portion 23. The compressor wheel is connected to the turbine wheel via the bearing portion 23, and when the turbine wheel is rotated by exhaust gas from the internal combustion engine 10, the compressor wheel rotates accordingly. Accordingly, the compressor 21 compresses air taken in from an intake passage 24 and supplies the compressed air to the internal combustion engine 10 via an intake manifold 25. Illustration of the compressor wheel and the turbine wheel is omitted.

The turbine 22 is provided in an exhaust system of the internal combustion engine 10, and the turbine wheel rotates by a flow of exhaust gas introduced via an exhaust manifold 26. The exhaust gas from the internal combustion engine 10 is discharged to an exhaust passage 28 via a supercharger outlet passage 27 after the turbine wheel is rotated. The exhaust passage 28 is a passage that guides exhaust gas from the supercharger 11 to the exhaust gas purifying catalyst 12.

The bearing portion 23 is a bearing that supports a shaft (not illustrated) connecting the turbine wheel and the compressor wheel.

In the present embodiment, the supercharger 11 includes a bypass passage 31 and a wastegate valve 32 in addition to the basic configuration described above.

The bypass passage 31 is a passage that guides the exhaust gas from the internal combustion engine 10 to the exhaust passage 28 without passing through the supercharger 11. The bypass passage 31 branches from the exhaust manifold 26 and connects the exhaust manifold 26 and the exhaust passage 28.

The wastegate valve 32 is a valve that opens and closes the bypass passage 31. In the present embodiment, the wastegate valve 32 is provided at an outlet of the bypass passage 31, that is, at a connection end (a junction between the bypass passage 31 and the exhaust passage 28) of the bypass passage 31 facing the exhaust passage 28. A specific attachment angle of the wastegate valve 32 with respect to the bypass passage 31 is freely set. In the present embodiment, the wastegate valve 32 is provided to be substantially perpendicular to the bypass passage 31 when the bypass passage 31 is closed.

When the wastegate valve 32 is closed, the exhaust gas from the internal combustion engine 10 flows into the exhaust passage 28 via the turbine 22. When the wastegate valve 32 is fully opened, the exhaust gas from the internal combustion engine 10 substantially flows into the exhaust passage 28 via the bypass passage 31. When the wastegate valve 32 is opened at an opening degree lower than a maximum opening degree, the exhaust gas in accordance with an opening degree of the wastegate valve 32 is released to the exhaust passage 28 without passing through the turbine 22. Accordingly, an amount of exhaust gas flowed into the turbine 22 is adjusted. As a result, a compression pressure (a supercharging pressure) of the intake air is adjusted by the compressor 21. The supercharging pressure is also adjusted when an output torque of the internal combustion engine 10 is adjusted in addition to a case where it is necessary to prevent the internal combustion engine 10 and the supercharger 11 from being damaged.

In the present embodiment, the opening and closing and opening degree (an opening angle) of the wastegate valve 32 are electronically controlled by a controller 33. The controller 33 is implemented by, for example, one or more computers, and is programmed to open and close the wastegate valve 32 or adjust the opening degree of the wastegate valve 32 according to a torque to be output from the internal combustion engine 10, a supercharging pressure, a temperature of the exhaust gas purifying catalyst 12, and the like. In particular, in the present embodiment, the controller 33 fully opens the wastegate valve 32 when it is necessary to heat the exhaust gas purifying catalyst 12 at the time of starting the internal combustion engine 10 or the like. Accordingly, in a case where the exhaust gas purifying catalyst 12 does not exhibit a sufficient reduction force due to a low temperature, a large amount of exhaust gas having a higher temperature than via the turbine 22 is fed to the exhaust gas purifying catalyst 12, and the exhaust gas purifying catalyst 12 is heated at an early stage.

In the present embodiment, the maximum opening degree of the wastegate valve 32 (an opening degree at the time of fully opening) is determined in advance by a mechanical mechanism. However, the maximum opening degree of the wastegate valve 32 can be determined under the control of the controller 33. That is, the maximum opening degree (a control maximum opening degree) that can be obtained during the control can be determined within a range of the maximum opening degree (a mechanical maximum opening degree) determined by a mechanical mechanism.

The exhaust gas purifying catalyst 12 is provided in the middle of the exhaust passage 28, and purifies (reduces) the harmful gas contained in the exhaust gas into harmless gas. The exhaust gas purifying catalyst 12 is formed using, for example, a three-way catalyst or the like that purifies carbon monoxide (CO), hydrocarbon (HC), and nitrogen oxide (NOₓ) contained in the exhaust gas. Therefore, when the exhaust gas purifying catalyst 12 is at a low temperature, the exhaust gas purifying catalyst 12 may not exhibit a sufficient reduction force. Therefore, when the exhaust gas purifying catalyst 12 is at a low temperature, it is necessary to heat the exhaust gas purifying catalyst 12 as early as possible.

FIG. 2 is a diagram illustrating a layout of the exhaust system. As illustrated in FIG. 2, the exhaust passage 28 includes an upstream portion 41, a curved portion 42, and a downstream portion 43.

The upstream portion 41 is an upstream portion along the flow of the exhaust gas in the exhaust passage 28, and is a portion of the exhaust passage 28 into which the exhaust gas flows from the supercharger 11 (the turbine 22) or the bypass passage 31. The exhaust gas flowed into the upstream portion 41 flows into the curved portion 42.

The curved portion 42 is a midstream portion along the flow of the exhaust gas in the exhaust passage 28, and is a portion of the exhaust passage 28 that changes a direction of the exhaust gas flowed into the upstream portion 41. A central axis of the curved portion 42 coincides with a central axis L₁ of the upstream portion 41 at a connection end between the upstream portion 41 and the curved portion 42. Similarly, the central axis of the curved portion 42 coincides with a central axis L₂ of the downstream portion 43 at a connection end between the downstream portion 43 and the curved portion 42. Specifically, the curved portion 42 bends the direction of the exhaust gas flowed into the upstream portion 41, for example, from about 60 degrees to about 120 degrees. In the present embodiment, the curved portion 42 changes the flow of exhaust gas by approximately 90 degrees. That is, an angle α between the central axis L₁ of the upstream portion 41 and the central axis L₂ of the downstream portion 43 is about 90 degrees.

The downstream portion 43 is a downstream portion along the flow of the exhaust gas in the exhaust passage 28, and a portion of the exhaust passage 28 that connects the curved portion 42 and the exhaust gas purifying catalyst 12. Therefore, the exhaust gas flowed into the downstream portion 43 from the curved portion 42 flows into the exhaust gas purifying catalyst 12.

The exhaust passage 28 forms a curve as a whole by respective portions (particularly, the curved portion 42). Each of the upstream portion 41 and the downstream portion 43 has a generally cylindrical shape. A shape of a cross section perpendicular to a center line (not illustrated) of the curved portion 42 is substantially circular. That is, the curved portion 42 is a bent cylinder.

In principle, the exhaust gas can pass through the entire curved exhaust passage 28. Hereinafter, in a plane including the central axis L₁ of the upstream portion 41 and the central axis L₂ of the downstream portion 43, a passage route on an inner side of the curve formed by the exhaust passage 28 is referred to as an inner course, and a passage route on an outer side is referred to as an outer course. An inner wall surface along an inner course of the exhaust passage 28 is referred to as an inner course wall, and an inner wall surface along an outer course of the exhaust passage 28 is referred to as an outer course wall. The inner course wall is formed by an inner course wall 50a of the upstream portion 41, an inner course wall 50b of the curved portion 42, and an inner course wall 50c of the downstream portion 43. Similarly, the inner wall surface along the outer course of the exhaust passage 28 is referred to as an outer course wall. The outer course wall is formed by an outer course wall 51a of the upstream portion 41, an outer course wall 51b of the curved portion 42, and an outer course wall 51c of the downstream portion 43.

A downstream direction of the exhaust gas along the central axis L₁ of the upstream portion 41 is defined as a Y direction, and a direction perpendicular to the Y direction and including the downstream portion 43 in a plane including the central axis L₁ of the upstream portion 41 and the central axis L₂ of the downstream portion 43 is defined as an X direction. In the present embodiment, since the curved portion 42 is bent at a substantially right angle, the central axis L₂ of the downstream portion 43 connected to the curved portion 42 is parallel to the X direction. The Z direction is a direction perpendicular to the X direction and the Y direction.

The bypass passage 31 is formed in a substantially cylindrical shape. The bypass passage 31 is obliquely connected to the upstream portion 41. That is, a central axis L₃ of the bypass passage 31 and the central axis L₁ of the upstream portion 41 are non-parallel. In the present embodiment, the central axis L₃ of the bypass passage 31 is inclined by a predetermined angle (hereinafter, referred to as a connection angle β) with respect to the central axis L₁ of the upstream portion 41. Specifically, the connection angle β of the bypass passage 31 with respect to the upstream portion 41 is, for example, about 30 degrees to about 60 degrees.

The wastegate valve 32 is a so-called swing type and is provided at the outlet of the bypass passage 31. That is, the wastegate valve 32 is configured to swing open at the outlet of the bypass passage 31 toward the downstream of the exhaust gas (the exhaust gas flowing through the bypass passage 31) and away from the inner course of the curve formed by the exhaust passage 28 . In FIG. 2, a state where the wastegate valve 32 closes the bypass passage 31 (hereinafter referred to as a closed state) is indicated by a solid line, and a state where the wastegate valve 32 opens the bypass passage 31 (hereinafter referred to as an open state) is indicated by dashed lines. A position of the wastegate valve 32 in the closed state may be referred to as a closed position, and a position of the wastegate valve 32 in the open state may be referred to as an open position. In particular, a state where the wastegate valve 32 is open at the maximum opening degree may be referred to as a fully open state, and a position of the wastegate valve 32 in the fully open state may be referred to as a fully open position. In FIG. 2, a mechanism (a hinge, an actuator, or the like) for controlling the opening degree of the wastegate valve 32 is omitted.

The wastegate valve 32 according to the present embodiment is not a simple flat plate (a circular plate) but includes a seating portion 61 and a bulge portion 62.

The seating portion 61 is a portion that seals the outlet of the bypass passage 31 when the wastegate valve 32 is closed. The seating portion 61 has, for example, a disk shape. In the present embodiment, the bypass passage 31 is sealed by bringing an end of the seating portion 61 into contact with an outer edge portion of the outlet of the bypass passage 31. Therefore, the seating portion 61 substantially serves as a seal valve for the bypass passage 31.

The bulge portion 62 is a portion (a convex portion) protruding from the seating portion 61. The bulge portion 62 bulges into the bypass passage 31 in the closed state. That is, the bulge portion 62 is provided on a bypass passage 31 side of the seating portion 61.

The bulge portion 62 is configured to adjust an amount of exhaust gas released from the bypass passage 31 to the exhaust passage 28 (the upstream portion 41) in accordance with the opening degree of the wastegate valve 32 before the wastegate valve 32 is fully opened. Specifically, when the wastegate valve 32 is opened, a part of the bulge portion 62 remains in the bypass passage 31 in accordance with the opening degree of the wastegate valve 32, and adjusts (reduces) a flow passage cross-sectional area at the outlet of the bypass passage 31. As a result, a flow rate of the exhaust gas released from the bypass passage 31 to the exhaust passage 28 (the upstream portion 41) is adjusted more smoothly in accordance with the opening degree of the wastegate valve 32 than in a case where the bulge portion 62 is not provided.

The bulge portion 62 adjusts a flow (hereinafter, referred to as an exhaust flow) of exhaust gas in the exhaust passage 28 which is released from the bypass passage 31 to the exhaust passage 28 (the upstream portion 41). That is, the bulge portion 62 adjusts the exhaust flow in the exhaust passage 28. In the present embodiment, when the wastegate valve 32 is in the fully open state to heat the exhaust gas purifying catalyst 12, the bulge portion 62 causes the exhaust gas flowing from the bypass passage 31 to be substantially concentrated on the inner course of the exhaust passage 28.

A shape of the bulge portion 62 may be determined freely to exhibit the above-described functions. Specifically, the bulge portion 62 may be formed in a spherical shape or a conical shape (conical shape). In the present embodiment, the bulge portion 62 is formed in a substantially spherical shape. A bulging amount (projecting length) of the bulge portion 62 with respect to the seating portion 61 is determined so that the entirety of the bulge portion 62 comes out of the bypass passage 31 when the wastegate valve 32 is fully opened. In the present embodiment, in particular, the shape and the bulging amount of the bulge portion 62 are determined such that the bulge portion 62 is in contact with a cross section at the outlet of the bypass passage 31 when the wastegate valve 32 is fully opened. This is to ensure a maximum exhaust flow rate without narrowing a flow passage cross-sectional area of the bypass passage 31 when the wastegate valve 32 is fully opened.

The exhaust gas purifying catalyst 12 includes a diffuser 66 and a catalyst body 67. The exhaust gas flowed into the exhaust gas purifying catalyst 12 from the downstream portion 43 is diffused by the diffuser 66, purified by the catalyst body 67, and then discharged to the outside of the vehicle.

Hereinafter, an opening angle of the wastegate valve 32 in the fully opened state, that is, the maximum opening degree of the wastegate valve 32 will be described.

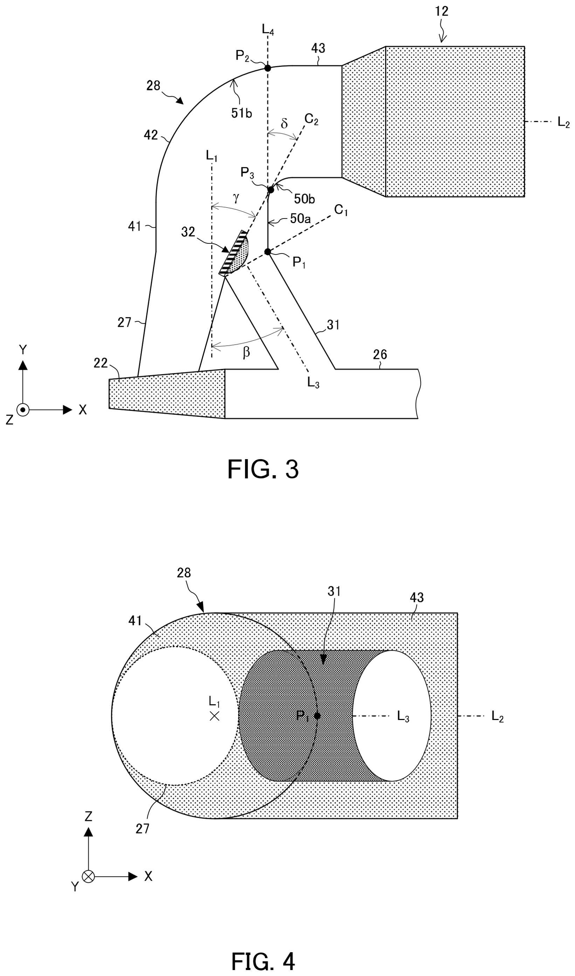

FIG. 3 is a diagram illustrating the maximum opening degree of the wastegate valve 32. Here, in the plane including the central axis L₁ of the upstream portion 41 and the central axis L₂ of the downstream portion 43, a line obtained by extending a surface of the seating portion 61 (for example, a surface on which the bulge portion 62 is formed) is referred to as an extension line of the wastegate valve 32. In FIG. 3, an extension line C₁ of the wastegate valve 32 in the closed state and an extension line C₂ of the wastegate valve 32 in the fully open state are indicated by dashed lines.

As illustrated in FIG. 3, the wastegate valve 32 is configured to open within a range less than an angle at which the wastegate valve 32 is parallel to the central axis L₁ of the upstream portion 41. That is, the fully open position of the wastegate valve 32 is determined such that an angle γ of the extension line C₂ with respect to the central axis L₁ of the upstream portion 41 becomes larger than zero (γ > 0). The maximum opening degree of the wastegate valve 32 is preferably set such that the angle γ is about 15 degrees or more and about 60 degrees or less. Accordingly, the bulge portion 62 tends to concentrate (drift) the exhaust flow in the exhaust passage 28 in the vicinity of the inner course.

As described above, in the present embodiment, the connection angle β of the bypass passage 31 with respect to the upstream portion 41 is in a range of about 30 degrees to about 60 degrees. Therefore, when the connection angle β is about 30 degrees, the maximum opening degree of the wastegate valve 32 is set such that the angle γ is about 60 degrees, for example. When the connection angle β is about 60 degrees, the maximum opening degree of the wastegate valve 32 is set such that the angle γ is about 30 degrees, for example.

In FIG. 3, an extension line L₄ of the inner course wall 50a of the upstream portion 41 is indicated by dashed lines. In terms of the relation with the extension line L₄ of the inner course wall 50a, the wastegate valve 32 is more preferably configured to open within a range in which the extension line C₂ of the wastegate valve 32 intersects with a line segment P₁ - P₂ connecting a first point P₁ and a second point P₂. That is, the maximum opening degree of the wastegate valve 32 is set so that the extension line C₂ does not exceed the second point P₂. The first point P₁ is an intersection point between the extension line C₁ of the wastegate valve 32 in the closed state and the extension line L₄ of the inner course wall 50a. In the present embodiment, the first point P₁ is substantially a connection point between the upstream portion 41 and the bypass passage 31. The second point P₂ is an intersection point between the extension line L₄ of the inner course wall 50a and the outer course wall 51b of the curved portion 42.

In this case, the wastegate valve 32 may be configured to open within a range in which the extension line C₂ intersects with the inner course wall 50a of the upstream portion 41 or the inner course wall 50b of the curved portion 42. That is, the extension line C₂ of the wastegate valve 32 may be limited to a range in which the extension line C₂ intersects with the inner course wall 50a or the inner course wall 50b. In this case, the bulge portion 62 tends to generate a particularly strong exhaust flow in the inner course of the exhaust passage 28.

The wastegate valve 32 may be configured to open within a range in which the extension line C₂ passes between the inner course wall 50b and the outer course wall 51b of the curved portion 42. That is, the maximum opening degree of the wastegate valve 32 may be a range in which the extension line C₂ does not intersect with the inner course wall 50a or the inner course wall 50b. In this way, when the extension line C₂ of the wastegate valve 32 in the fully open state passes between the inner course wall 50b and the outer course wall 51b of the curved portion 42, the bulge portion 62 can generate a smooth and strong exhaust flow in the inner course of the exhaust passage 28.

Further, in FIG. 3, a contact point between the extension line C₂ of the wastegate valve 32 in the fully open state and the inner course wall 50b of the curved portion 42 is indicated as a third point P₃. As illustrated in FIG. 3, the maximum opening degree of the wastegate valve 32 in the fully open state is particularly preferably set such that the extension line C₂ thereof is in contact with the inner course wall 50b of the curved portion 42. That is, the wastegate valve 32 is particularly preferably configured to open until the extension line C₂ of the wastegate valve 32 comes into contact with a corner portion of the inner course in the exhaust passage 28. In this way, when the wastegate valve 32 opens to be in contact with a corner of the inner course of the exhaust passage 28 in the fully open state, the exhaust flow concentration (drift) in the vicinity of the inner course is optimized by the bulge portion 62, and the exhaust gas purifying catalyst 12 is easily heated particularly quickly by the exhaust gas released from the bypass passage 31. In the present embodiment, as illustrated in FIG. 3, the maximum opening degree of the wastegate valve 32 is set such that the extension line C₂ thereof is in contact with the inner course wall 50b of the curved portion 42.

In addition, the maximum opening degree of the wastegate valve 32 is preferably set such that an angle δ at which the extension line C₂ of the wastegate valve 32 intersects with the extension line L₄ of the inner course wall 50b is not less than about 15 degrees and not more than about 60 degrees. Accordingly, the bulge portion 62 tends to concentrate (drift) the exhaust flow in the exhaust passage 28 in the vicinity of the inner course.

In the present embodiment, the upstream portion 41 is formed in a cylindrical shape, and the central axis L₁ of the upstream portion 41 and the extension line L₄ of the inner course wall 50a are parallel to each other. Therefore, the angle y and an angle δ are substantially equal to each other. Therefore, a numerical condition that the angle γ should satisfy (15 ≤ γ ≤ 60) and a numerical condition that the angle δ should satisfy (15 ≤ δ ≤ 60) have substantially the same technical significance.

However, when the upstream portion 41 is formed by, for example, a wind passage whose cross-sectional area is enlarged or reduced along the flow of the exhaust gas, the central axis L₁ of the upstream portion 41 and the extension line L₄ of the inner course wall 50a are non-parallel. In this case, the numerical condition that the angle γ should satisfy and the numerical condition that the angle δ should satisfy have different technical meanings. Therefore, when the central axis L₁ of the upstream portion 41 and the extension line L₄ of the inner course wall 50a are non-parallel to each other, it is preferable that any one of the numerical condition that the angle γ should satisfy and the numerical condition that the angle δ should satisfy is satisfied, and it is particularly preferable that both of the numerical conditions are satisfied.

FIG. 4 is a diagram illustrating a three-dimensional positional relation between the bypass passage 31 and the downstream portion 43. As illustrated in FIG. 4, in the present embodiment, when viewed in a direction (the Y direction) of the central axis L₁ of the upstream portion 41, the central axis L₁ of the upstream portion 41 and the central axis L₂ of the downstream portion 43 are on the same plane (an XY plane). The central axis L₃ of the bypass passage 31 is also on this plane. The bypass passage 31 and the downstream portion 43 are located on the same side (a positive side in the X direction) with respect to the central axis L₁ of the upstream portion 41. Therefore, the exhaust system in the supercharging system according to the present embodiment has a layout in which the flow of the exhaust gas released from the bypass passage 31 to the exhaust passage 28 is turned. In this way, the layout in which the flow of the exhaust gas is turned is one of the layouts in which it takes time to increase the temperature when the exhaust gas purifying catalyst 12 is heated.

In the present embodiment, the central axis L₃ of the bypass passage 31 is located on a plane formed by the central axis L₁ of the upstream portion 41 and the central axis L₃ of the downstream portion 43, but the present invention is not limited thereto. As long as a layout is adopted in which the bypass passage 31 and the downstream portion 43 are on the same side with respect to the central axis L₁ of the upstream portion 41 and the flow of the exhaust gas released from the bypass passage 31 to the exhaust passage 28 is substantially turned, the central axis L₃ of the bypass passage 31 may not necessarily be on this plane.

As described above, the wastegate valve 32 is provided at the outlet of the bypass passage 31 and is configured to open within a range less than an angle at which the wastegate valve 32 is parallel to the central axis L₁ of the upstream portion 41. Therefore, when viewed in the direction of the central axis L₁ of the upstream portion 41, the wastegate valve 32 is within a range of the upstream portion 41.

That is, in the XZ plane, the wastegate valve 32 in the open state (particularly the fully open state) is within the range of the upstream portion 41. In this way, since the wastegate valve 32 in the open state is within the range of the upstream portion 41, the exhaust flow generated by the bulge portion 62 is likely to concentrate on the inner course without being disturbed. For example, when the wastegate valve 32 in the open state is deviated from the range of the upstream portion 41, such as when the wastegate valve 32 is provided in the bypass passage 31, the exhaust flow generated by the bulge portion 62 is disturbed by a connection portion (the first point P₁) between the bypass passage 31 and the upstream portion 41. However, when the wastegate valve 32 in the open state is in the range of the upstream portion 41 as described above, the exhaust flow generated by the bulge portion 62 is less likely to be disturbed by the connection portion between the bypass passage 31 and the upstream portion 41, and is likely to concentrate on the inner course while maintaining a strong flow.

Further, in the XZ plane, the wastegate valve 32 in the closed state is within the range of the upstream portion 41. In this way, when the wastegate valve 32 in the closed state is within the range of the upstream portion 41, a distance between the exhaust flow generated by the bulge portion 62 and the inner course wall 50a is kept small. As a result, the exhaust flow generated by the bulge portion 62 easily forms a strong flow along the inner course. When the wastegate valve 32 in the open state (the fully open state) and the closed state is in the upstream portion 41, particularly, the exhaust flow generated by the bulge portion 62 easily forms a strong flow along the inner course.

In addition, in terms of the relation between the supercharger outlet passage 27 and the bypass passage 31, the supercharger outlet passage 27 is provided on an outer course side of the exhaust passage 28, and the bypass passage 31 is provided on an inner course side of the exhaust passage 28. Therefore, a turning angle of the exhaust gas introduced from the supercharger outlet passage 27 is smaller than a turning angle of the exhaust gas introduced from the bypass passage 31. In the present embodiment, when viewed in the direction of the central axis L₁ of the upstream portion 41, the bypass passage 31 is connected (joined) to the exhaust passage 28 at a position eccentric to an inner course side with respect to the central axis L₁ of the upstream portion 41.

In this layout, the exhaust gas is smoothly guided to the exhaust gas purifying catalyst 12 in a normal scene in which exhaust gas is introduced into the exhaust passage 28 from the supercharger outlet passage 27. On the other hand, in a scene in which the exhaust gas is mainly introduced from the bypass passage 31 to the exhaust passage 28 to heat the exhaust gas purifying catalyst 12, the heat of the exhaust gas tends to be dissipated before reaching the exhaust gas purifying catalyst 12. That is, the exhaust system in the supercharging system according to the present embodiment has a layout optimized for the normal scene as a whole. Therefore, in the supercharging system according to the present embodiment, in the scene in which the exhaust gas purifying catalyst 12 is heated, as described above, a shape, an opening degree, and the like of the wastegate valve 32 (the bulge portion 62) are devised. Accordingly, when the exhaust gas purifying catalyst 12 needs to be heated, the exhaust gas purifying catalyst 12 is heated earlier than in the case where such a device is not provided.

Hereinafter, the operation of the supercharging system 100 configured as described above, in particular, the operation in the scene of heating the exhaust gas purifying catalyst 12, will be described. Although an estimation mechanism in which the supercharging system 100 operates will be described here, even if some or all of the estimation mechanism lacks accuracy, the supercharging system 100 according to the present embodiment does not have the following operation.

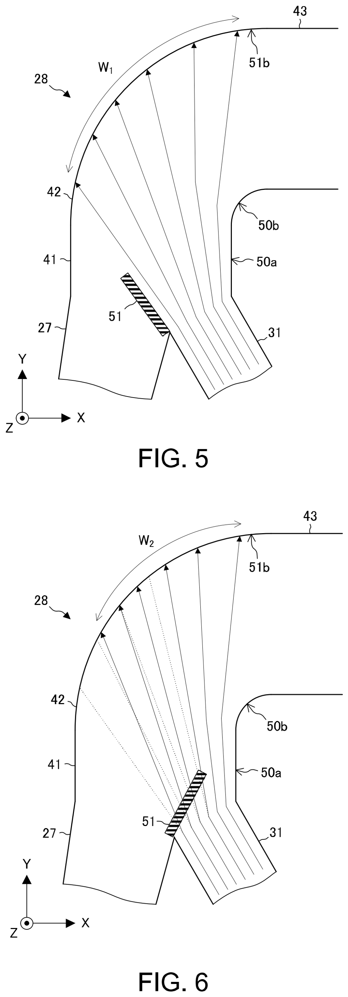

FIG. 5 is a diagram schematically illustrating a flow of exhaust gas in a first comparative example. A layout of the exhaust system in the supercharging system according to the first comparative example is the same as the layout of the exhaust system in the supercharging system 100 according to the embodiment. However, in the supercharging system according to the first comparative example, when the wastegate valve 51 is formed of a simple flat plate (a circular plate) and the exhaust gas purifying catalyst 12 is heated, the wastegate valve 51 is configured to open at an angle at which the wastegate valve 51 is parallel to the central axis L₁ of the upstream portion 41. In FIG. 5, as an example, the wastegate valve 51 opens to be parallel to the central axis L₃ of the bypass passage 31. In FIG. 5, the exhaust flow when the exhaust gas purifying catalyst 12 is heated is illustrated by the arrows indicated inside the bypass passage 31 and the exhaust passage 28.

As in the first comparative example illustrated in FIG. 5, when the wastegate valve 51 is formed of a simple flat plate and the wastegate valve 51 is opened without any substantial restriction when the exhaust gas purifying catalyst 12 is heated, the exhaust flow released from the bypass passage 31 to the exhaust passage 28 flows into the upstream portion 41 and is diffused widely toward the outer course wall 51b of the curved portion 42. When the exhaust gas purifying catalyst 12 needs to be heated, the outer course wall 51b of the curved portion 42 is naturally cooled. Therefore, even when the exhaust flow has a high temperature immediately after being introduced into the exhaust passage 28, a large amount of heat is taken by the outer course wall 51b in the wide range W₁ until being guided to the exhaust gas purifying catalyst 12. In the first comparative example, the temperature rise of the exhaust gas purifying catalyst 12 stagnates until the portion of the range W₁ is heated. That is, it takes a long time to heat the exhaust gas purifying catalyst 12 until a sufficient reduction force can be exhibited.

FIG. 6 is a diagram schematically illustrating a flow of exhaust gas in a second comparative example. A layout of an exhaust system in a supercharging system according to the second comparative example is the same as the layout of the exhaust system in the supercharging system 100 according to the embodiment. However, in the supercharging system according to the second comparative example, the wastegate valve 51 is formed of a simple flat plate (a circular plate). In the supercharging system according to the second comparative example, similarly to the supercharging system 100 according to the embodiment, when the exhaust gas purifying catalyst 12 is heated, the wastegate valve 51 is configured to open within a range less than an angle at which the wastegate valve 51 is parallel to the central axis L₁ of the upstream portion 41. Here, similarly to the wastegate valve 32 according to the embodiment, the wastegate valve 51 is configured to open until the extension line thereof comes into contact with the inner course wall 50b of the curved portion 42. That is, the second comparative example is an example in which a maximum opening degree of the wastegate valve 51 is set (restricted) in the same manner as that of the wastegate valve 32 according to the embodiment with respect to the first comparative example. In FIG. 6, the exhaust flow when the exhaust gas purifying catalyst 12 is heated is illustrated by the arrows indicated inside the bypass passage 31 and the exhaust passage 28. In FIG. 6, a dotted line indicates the exhaust flow in the first comparative example.

As in the second comparative example illustrated in FIG. 6, when the wastegate valve 51 is formed of a simple flat plate and the exhaust gas purifying catalyst 12 is heated, if the wastegate valve 51 opens in a range less than an angle at which the wastegate valve 51 is parallel to the central axis L₁ of the upstream portion 41, the diffusion of the exhaust flow is prevented to some extent as compared with the first comparative example. However, in the second comparative example, the heat of the exhaust flow is also taken away by a wide range W₂ of the outer course wall 51b. Therefore, it takes a long time to heat the exhaust gas purifying catalyst 12 to a temperature at which a sufficient reduction force can be exhibited.

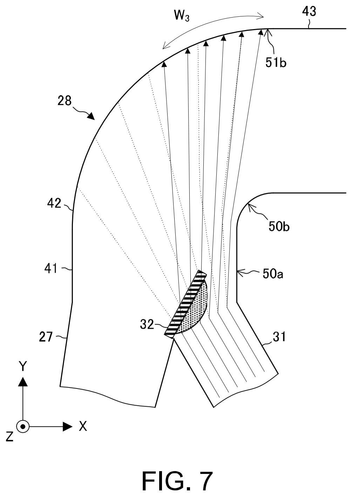

FIG. 7 is a diagram schematically illustrating a flow of exhaust gas in the present embodiment. In the present embodiment, as described above, when the exhaust gas purifying catalyst 12 is heated, the wastegate valve 32 is configured to open within a range less than an angle at which the wastegate valve 32 is parallel to the central axis L₁ of the upstream portion 41, and the wastegate valve 32 includes the bulge portion 62. The wastegate valve 32 that opens within a range less than an angle at which the wastegate valve 32 is parallel to the central axis L₁ of the upstream portion 41 generally has an effect of causing the exhaust flow to flow toward the inner course (the inner course wall 50a) side. The bulge portion 62 has a function of preventing disturbance of the exhaust flow hitting the wastegate valve 32 and smoothly dividing the exhaust flow while maintaining a strong flow. Therefore, in the present embodiment, due to the synergetic effect of the opening degree restriction and the shape (the shape of the bulge portion 62) of the wastegate valve 32, as illustrated in FIG. 7, an exhaust flow is generated more strongly along the inner course (the inner course wall 50a) than in the second comparative example.

As a result, in the present embodiment, a range W₃ in which the exhaust flow hits the outer course wall 51b of the curved portion 42 is further narrower than that in the second comparative example (the range W₂). Therefore, in the present embodiment, the exhaust flow flows into the exhaust gas purifying catalyst 12 with less heat taken by the outer course wall 51b of the curved portion 42 and carrying more heat than in the first comparative example and the second comparative example. In the present embodiment, the time required to heat the exhaust gas purifying catalyst 12 is short. When comparing after a certain time has elapsed from the start of the heating of the exhaust gas purifying catalyst 12, the temperature of the exhaust gas purifying catalyst 12 is higher in the present embodiment than those in the first comparative example and the second comparative example.

### [Modifications]

In the above embodiment, the maximum opening degree of the wastegate valve 32, that is, the opening degree of the wastegate valve 32 when the exhaust gas purifying catalyst 12 is heated is determined in advance by a mechanical mechanism. For example, the opening degree of the wastegate valve 32 when the exhaust gas purifying catalyst 12 is heated can be restricted by the control of the controller 33. Therefore, the supercharging system 100 according to the above embodiment can be mechanically configured such that the wastegate valve 32 opens at an angle equal to or greater than an angle at which the wastegate valve 32 is parallel to the central axis L₁ of the upstream portion 41. When the exhaust gas purifying catalyst 12 is heated, the wastegate valve 32 can be configured to open within a range less than an angle at which the wastegate valve 32 is parallel to the central axis L₁ of the upstream portion 41 under the control of the controller 33. In this case, the same operation and effect as those of the above embodiment are achieved.

As described above, the supercharging system according to the present embodiment and the modification is a supercharging system 100 including: the internal combustion engine 10; the supercharger 11 that compresses the intake air of the internal combustion engine 10 by the exhaust gas from the internal combustion engine 10; the exhaust gas purifying catalyst 12 that purifies the exhaust gas; the exhaust passage 28 that guides the exhaust gas from the supercharger 11 to the exhaust gas purifying catalyst 12; the bypass passage 31 that guides the exhaust gas to the exhaust passage 28 without passing through the supercharger 11; and the wastegate valve 32 that opens and closes the bypass passage 31. In this supercharging system 100, the exhaust passage 28 forms a curve by the upstream portion 41 into which the exhaust gas flows from the supercharger 11 or the bypass passage 31, the curved portion 42 that changes a direction of the exhaust gas flowed into the upstream portion 41, and the downstream portion 43 that connects the curved portion 42 and the exhaust gas purifying catalyst 12. The wastegate valve 32 includes the bulge portion 62 that bulges into the bypass passage 31 when the bypass passage 31 is closed. The wastegate valve 32 is configured to swing open at the outlet of the bypass passage 31 toward a downstream side and away from the inner course of the curve. The wastegate valve 32 is configured to open within a range less than an angle (γ > 0) at which the wastegate valve 32 is parallel to the central axis L₁ of the upstream portion 41.

As described above, the supercharging system 100 according to the present embodiment and the like specifically has a layout in which the exhaust gas released from the bypass passage 31 is turned by the curved exhaust passage 28 and flows into the exhaust gas purifying catalyst 12. The wastegate valve 32 is provided with the bulge portion 62, and the wastegate valve 32 is configured to swing open toward a downstream side in a range less than an angle at which the wastegate valve 32 is parallel to the central axis L₁ of the upstream portion 41 (γ > 0). Therefore, in the supercharging system 100 according to the present embodiment and the like, when the exhaust gas purifying catalyst 12 is heated by the exhaust gas released from the bypass passage 31, the temperature rise of the exhaust gas purifying catalyst 12 can be advanced, for example, as compared with the first comparative example and the second comparative example.

In the supercharging system 100 according to the embodiment and the modification described above, when the wastegate valve 32 is closed, an intersection point between the extension line (C₁) of the wastegate valve 32 and the extension line L₄ of the inner course wall 50a of the upstream portion 41 is defined as the first point P₁, and an intersection point between the extension line L₄ of the inner course wall 50a of the upstream portion 41 and the outer course wall 51b of the curved portion 42 is defined as the second point P₂. The wastegate valve 32 is configured to open within a range in which the extension line (C₂) of the wastegate valve 32 intersects with the line segment P₁ - P₂ connecting the first point P₁ and the second point P₂.

In this way, when the extension line (C₂) of the wastegate valve 32 is configured to open within a range (γ > 0) that is less than an angle at which the extension line (C₂) of the wastegate valve 32 is parallel to the central axis L₁ of the upstream portion 41, in particular, within a range in which the extension line C₂ intersects with the line segment P₁ - P₂, it is particularly easy to advance the temperature rise of the exhaust gas purifying catalyst 12 when the exhaust gas purifying catalyst 12 is heated by the exhaust gas released from the bypass passage 31.

In the supercharging system 100 according to the embodiment and the modification described above, the wastegate valve 32 may be configured to open within a range in which the extension line (C₂) of the wastegate valve 32 intersects with the inner course wall 50a of the upstream portion 41.

In this way, when the extension line (C₂) of the wastegate valve 32 is configured to open within a range in which the extension line (C₂) intersects with the inner course wall 50a of the upstream portion 41, the diffusion of the exhaust gas is prevented, and a particularly strong exhaust flow is likely to occur along an inner course of the exhaust passage 28. Therefore, heat is not taken away from the curved portion 42 (particularly, the outer course wall 51b of the curved portion 42), and high temperature exhaust gas is easily guided to the exhaust passage 28. Therefore, when the exhaust gas purifying catalyst 12 is heated by the exhaust gas released from the bypass passage 31, the temperature rise of the exhaust gas purifying catalyst 12 can be advanced in particular.

In the supercharging system 100 according to the embodiment and the modification described above, the wastegate valve 32 may be configured to open within a range in which the extension line (C₂) of the wastegate valve 32 passes between the inner course wall 50b and the outer course wall 51b of the curved portion 42.

In this way, when the extension line (C₂) of the wastegate valve 32 is configured to open within a range passing between the inner course wall 50b and the outer course wall 51b of the curved portion 42, diffusion of the exhaust gas is prevented, and a strong exhaust flow occurs along the inner course of the exhaust passage 28. Further, the flow rate of the exhaust flow is secured. Therefore, heat is not taken away from the curved portion 42 (in particular, the outer course wall 51b of the curved portion 42), and high temperature and large amount of exhaust gas is easily guided to the exhaust passage 28. Therefore, when the exhaust gas purifying catalyst 12 is heated by the exhaust gas released from the bypass passage 31, the temperature rise of the exhaust gas purifying catalyst 12 can be advanced in particular.

In the supercharging system 100 according to the embodiment and the modification described above, the wastegate valve 32 is configured to open until the extension line (C₂) of the wastegate valve 32 comes into contact with the corner of the inner course.

In this way, when the wastegate valve 32 is configured to open toward a corner in the inner course of the exhaust passage 28, particularly, a flow rate of the exhaust flow is likely to be ensured while a strong exhaust flow occurs along the inner course of the exhaust passage 28. That is, the operation of concentrating the exhaust gas on the inner course and the flow rate of the exhaust gas are easily optimized. Therefore, when the exhaust gas purifying catalyst 12 is heated by the exhaust gas released from the bypass passage 31, the temperature rise of the exhaust gas purifying catalyst 12 can be advanced in particular.

In the supercharging system 100 according to the embodiment and the modification described above, when the wastegate valve 32 is fully opened, the angle δ at which the line segment P₁ - P₂ connecting the first point P₁ and the second point P₂ intersects with the extension line (C₂) of the wastegate valve 32 is not less than 15 degrees and not more than 60 degrees.

In this way, when the maximum opening degree of the wastegate valve 32 is set such that the angle δ is not less than 15 degrees and not more than 60 degrees, the diffusion of the exhaust gas is prevented, and a particularly strong exhaust flow is likely to occur along the inner course of the exhaust passage 28. Therefore, when the exhaust gas purifying catalyst 12 is heated by the exhaust gas released from the bypass passage 31, the temperature rise of the exhaust gas purifying catalyst 12 can be advanced in particular.

In the supercharging system 100 according to the embodiment and the modification described above, the angle γ formed between the central axis L₁ of the upstream portion 41 and the extension line (C₂) of the wastegate valve 32 when the wastegate valve 32 is fully opened is not less than 15 degrees and not more than 60 degrees.

In this way, when the maximum opening degree of the wastegate valve 32 is set such that the angle γ is not less than 15 degrees and not more than 60 degrees, the diffusion of the exhaust gas is prevented, and a particularly strong exhaust flow is likely to occur along the inner course of the exhaust passage 28. Therefore, when the exhaust gas purifying catalyst 12 is heated by the exhaust gas released from the bypass passage 31, the temperature rise of the exhaust gas purifying catalyst 12 can be advanced in particular.

In the supercharging system 100 according to the embodiment and the modification described above, the central axis L₃ of the bypass passage 31 and the central axis L₂ of the downstream portion 43 are located on the same plane, and the bypass passage 31 and the downstream portion 43 are located on the same side with respect to the central axis L₁ of the upstream portion 41.

In this way, when the exhaust system has a layout in which the flow of the exhaust gas released from the bypass passage 31 to the exhaust passage 28 is particularly reversed (a layout in which the exhaust gas is substantially U-turned), even if the exhaust gas is concentrated on the inner course, the exhaust gas is separated from the inner course walls 50a and 50b when entering the downstream portion 43, and is easily diffused into the downstream portion 43. Therefore, when the exhaust flow is concentrated on the inner course, the deviation of the temperature of the exhaust flow in the downstream portion 43 is prevented, and the exhaust gas having a uniform temperature distribution is introduced into the exhaust gas purifying catalyst 12. Therefore, a temperature of the exhaust gas purifying catalyst 12 rises early and uniformly.

In the supercharging system 100 according to the embodiment and the modification described above, when viewed in the direction of the central axis L₁ of the upstream portion 41, the wastegate valve 32 in the maximum open state is within the range of the upstream portion 41.

In this way, when the wastegate valve 32 in the fully open state is within the range of the upstream portion 41 when viewed in the direction of the central axis L₁ of the upstream portion 41, the exhaust flow generated by the bulge portion 62 is likely to concentrate on the inner course without being disturbed. Therefore, a range in which the exhaust flow hits the curved portion 42 is reduced, and the exhaust flow is less likely to be deprived of heat by the curved portion 42 (in particular, the outer course wall 51b). Therefore, when the exhaust gas purifying catalyst 12 is heated by the exhaust gas released from the bypass passage 31, the temperature rise of the exhaust gas purifying catalyst 12 can be advanced in particular.

In the supercharging system 100 according to the embodiment and the modification described above, when viewed in the direction of the central axis L₁ of the upstream portion 41, the wastegate valve 32 in the closed state is within the range of the upstream portion 41.

In this way, when the wastegate valve 32 in the closed state is within the range of the upstream portion 41 when viewed in the direction of the central axis L₁ of the upstream portion 41, the exhaust flow generated by the bulge portion 62 easily forms a strong flow along the inner course. Therefore, the range in which the exhaust flow hits the curved portion 42 is reduced, and the exhaust flow is less likely to be deprived of heat by the curved portion 42 (in particular, the outer course wall 51b). Therefore, when the exhaust gas purifying catalyst 12 is heated by the exhaust gas released from the bypass passage 31, the temperature rise of the exhaust gas purifying catalyst 12 can be advanced in particular.

In the supercharging system 100 according to the embodiment and the modification described above, when viewed in the direction of the central axis L₁ of the upstream portion 41, the bypass passage 31 is connected to the exhaust passage 28 at the position eccentric to the inner course side with respect to the central axis L₁ of the upstream portion 41.

In this way, when the bypass passage 31 is connected to the exhaust passage 28 at a position eccentric to the inner course side, the exhaust gas is smoothly guided to the exhaust gas purifying catalyst 12 in the normal scene in which the exhaust gas is introduced into the exhaust passage 28 from the supercharger outlet passage 27. In order to heat the exhaust gas purifying catalyst 12, in the scene in which the exhaust gas is mainly introduced into the exhaust passage 28 from the bypass passage 31, the exhaust gas purifying catalyst 12 can be heated at an early stage more than the synergetic effect of the above-described design of the shape and opening degree of the wastegate valve 32 for concentrating the exhaust flow in the inner course.

In the supercharging system 100 according to the embodiment and the modification described above, when the wastegate valve 32 is fully opened, the bulge portion 62 is entirely located outside the bypass passage 31.

In this way, when the shape and the bulging amount of the bulge portion 62 are determined such that the bulge portion 62 is entirely located outside the bypass passage 31 when the wastegate valve 32 is fully opened, when the exhaust gas purifying catalyst 12 is heated, the bulge portion 62 does not substantially narrow the flow passage cross-sectional area of the bypass passage 31 while adjusting a flow passage of the exhaust flow. Therefore, a maximum exhaust flow rate is secured. Therefore, the temperature rise of the exhaust gas purifying catalyst 12 can be advanced in particular.

In the supercharging system 100 according to the embodiment and the modification described above, when the wastegate valve 32 is fully opened, the bulge portion 62 is in contact with a cross section in the outlet of the bypass passage 31.

In this way, in a case where the shape and the bulging amount of the bulge portion 62 are determined such that the bulge portion 62 is in contact with a cross section at the outlet of the bypass passage 31 when the wastegate valve 32 is fully opened, when the exhaust gas purifying catalyst 12 is heated, a strong exhaust flow is likely to be formed along the inner course while ensuring the maximum exhaust flow rate. Therefore, the temperature rise of the exhaust gas purifying catalyst 12 can be advanced in particular.

A method for controlling a supercharging system according to the embodiment and the modification (particularly, a method for controlling a supercharging system according to the modification) is a method for controlling the supercharging system 100 including the internal combustion engine 10, the supercharger 11 that compresses the intake air from the internal combustion engine 10 by the exhaust gas from the internal combustion engine 10, the exhaust gas purifying catalyst 12 that purifies the exhaust gas, the exhaust passage 28 that guides the exhaust gas from the supercharger 11 to the exhaust gas purifying catalyst 12, the bypass passage 31 that guides the exhaust gas to the exhaust passage 28 without passing through the supercharger 11, the wastegate valve 32 that opens and closes the bypass passage 31, and a controller that controls the opening and closing of the wastegate valve 32. In this supercharging system 100, the exhaust passage 28 forms a curve by the upstream portion 41 into which the exhaust gas flows from the supercharger 11 or the bypass passage 31, the curved portion 42 that changes a direction of the exhaust gas flowed into the upstream portion 41, and the downstream portion 43 that connects the curved portion 42 and the exhaust gas purifying catalyst 12. The wastegate valve 32 includes the bulge portion 62 that bulges into the bypass passage 31 when the bypass passage 31 is closed. The wastegate valve 32 is configured to swing open at the outlet of the bypass passage 31 toward the downstream side and away from the inner course of the curve. At the time of heating the exhaust gas purifying catalyst 12, the controller 33 opens the wastegate valve 32 within a range less than an angle at which the wastegate valve 32 is parallel to the central axis L₁ of the upstream portion 41.

As described above, when the wastegate valve 32 opens within a range less than an angle at which the wastegate valve 32 is parallel to the central axis L₁ of the upstream portion 41 under the control of the controller 33 at the time of heating the exhaust gas purifying catalyst 12, the temperature rise of the exhaust gas purifying catalyst 12 can be advanced even when the maximum opening degree of the wastegate valve 32 is not restricted by a mechanical mechanism.

Although the embodiments of the present invention have been described above, the configurations described in the above-mentioned embodiments and modification are merely examples of applications of the present invention, and are not intended to limit the technical scope of the invention.

The present application claims priority based on Japanese Patent Application No. 2023-116091 filed to the Japan Patent Office on July 14, 2023, and the entire contents of this application are incorporated herein by reference.

## Claims

1. A supercharging system comprising:
an internal combustion engine;
a supercharger that compresses intake air of the internal combustion engine by exhaust gas from the internal combustion engine;
an exhaust gas purifying catalyst that purifies the exhaust gas;
an exhaust passage that guides the exhaust gas from the supercharger to the exhaust gas purifying catalyst;
a bypass passage that guides the exhaust gas to the exhaust passage without passing through the supercharger; and
a wastegate valve that opens and closes the bypass passage, wherein
the exhaust passage forms a curve by an upstream portion into which the exhaust gas flows from the supercharger or the bypass passage, a curved portion that changes a direction of the exhaust gas flowed into the upstream portion, and a downstream portion that connects the curved portion and the exhaust gas purifying catalyst,
the wastegate valve includes a bulge portion that bulges into the bypass passage when the bypass passage is closed,
the wastegate valve is configured to swing open at an outlet of the bypass passage toward a downstream side and away from an inner course of the curve, and
the wastegate valve is configured to open within a range less than an angle parallel to a central axis of the upstream portion.

2. The supercharging system according to claim 1, wherein
when the wastegate valve is closed, the wastegate valve is configured to open within a range in which an extension line of the wastegate valve intersects with a line segment connecting a first point and a second point, where the first point is an intersection point between the extension line of the wastegate valve and an extension line of an inner course wall of the upstream portion, and the second point is an intersection point between the extension line of the inner course wall of the upstream portion and an outer course wall of the curved portion.

3. The supercharging system according to claim 2, wherein
the wastegate valve is configured to open within a range in which the extension line of the wastegate valve intersects with the inner course wall of the upstream portion.

4. The supercharging system according to claim 2, wherein
the wastegate valve is configured to open to a range in which the extension line of the wastegate valve passes between the inner course wall and the outer course wall of the curved portion.

5. The supercharging system according to claim 2, wherein
the wastegate valve is configured to open until the extension line of the wastegate valve comes into contact with a corner of the inner course.

6. The supercharging system according to claim 2, wherein
when the wastegate valve is fully opened, an angle at which the line segment connecting the first point and the second point intersects with the extension line of the wastegate valve is 15 degrees or more and 60 degrees or less.

7. The supercharging system according to claim 2, wherein
when the wastegate valve is fully opened, an angle formed between the central axis of the upstream portion and the extension line of the wastegate valve is 15 degrees or more and 60 degrees or less.

8. The supercharging system according to claim 1, wherein
a central axis of the bypass passage and a central axis of the downstream portion are on the same plane, and
the bypass passage and the downstream portion are on the same side with respect to the central axis of the upstream portion.

9. The supercharging system according to claim 1, wherein
when viewed in a direction of the central axis of the upstream portion, the wastegate valve in a fully open state is within a range of the upstream portion.

10. The supercharging system according to claim 9, wherein
when viewed in the direction of the central axis of the upstream portion, the wastegate valve in a closed state is within the range of the upstream portion.

11. The supercharging system according to claim 1, wherein
when viewed in a direction of the central axis of the upstream portion, the bypass passage is connected to the exhaust passage at a position eccentric to a side of the inner course with respect to the central axis of the upstream portion.

12. The supercharging system according to claim 1, wherein
when the wastegate valve is fully opened, the bulge portion is entirely located outside the bypass passage.

13. The supercharging system according to claim 12, wherein
when the wastegate valve is fully opened, the bulge portion comes into contact with a cross section at an outlet of the bypass passage.

14. A method for controlling a supercharging system,
the supercharging system including
an internal combustion engine,
a supercharger that compresses intake air of the internal combustion engine by exhaust gas from the internal combustion engine,
an exhaust gas purifying catalyst that purifies the exhaust gas,
an exhaust passage that guides the exhaust gas from the supercharger to the exhaust gas purifying catalyst,
a bypass passage that guides the exhaust gas to the exhaust passage without passing through the supercharger,
a wastegate valve that opens and closes the bypass passage, and
a controller that controls opening and closing of the wastegate valve,
the exhaust passage forming a curve by an upstream portion into which the exhaust gas flows from the supercharger or the bypass passage, a curved portion that changes a direction of the exhaust gas flowed into the upstream portion, and a downstream portion that connects the curved portion and the exhaust gas purifying catalyst,
the wastegate valve including a bulge portion that bulges into the bypass passage when the bypass passage is closed, and
the wastegate valve being configured to swing open at an outlet of the bypass passage toward a downstream side and away from an inner course of the curve,
the method comprising:
by the controller, opening the wastegate valve within a range less than an angle parallel to a central axis of the upstream portion when the exhaust gas purifying catalyst is heated.
